# EUROPÄISCHE PATENTSCHRIFT

(11) **EP 0 534 095 B1**
(45) Veröffentlichungstag und Bekanntmachung des Hinweises auf die Patenterteilung: **28.06.1995**
(21) Anmeldenummer: 92113142.1
(22) Anmeldetag: 01.08.1992
(51) Int. Cl.: B65B 51/22, B23K 20/10, B29C 65/08

(54) **Vorrichtung zum Ultraschallschweissen von Siegelnähten**
Apparatus for ultrasonically welding sealing joints
Appareil pour le soudage par ultrasons de joints de scellage

(30) Priorität: 21.09.1991 DE 4131465
(43) Veröffentlichungstag der Anmeldung: 31.03.1993
(73) Patentinhaber: Tetra Laval Holdings & Finance SA, 1009 Pully (CH)
(72) Erfinder: Riedel, Thomas, D-64584 Biebesheim (DE)
(74) Vertreter: Weber, Dieter, Dr.

(56) Entgegenhaltungen:
- FR-A- 2 366 996
- GB-A- 2 017 041

## Beschreibung

Die Erfindung betrifft eine Vorrichtung zum Ultraschallschweißen von Siegelnähten, insbesondere am doppelten Kartonstreifen einer Fließmittelpackung, mit einer Sonotrode und einem deren vorderseitigen Stirnfläche gegenüberliegenden Amboß, die beide auf vorgegebenen Bahnen bewegbar sind (FR-A-2 366 996).

Auf dem Gebiet der Herstellung von Flüssigkeitspackungen ist es bekannt, die im Querschnitt viereckige offene Hülse aus mit Kunststoff beidseitig beschichtetem Papier so zu falten, daß sich ein doppelter Kartonstreifen ergibt, mit dessen Hilfe nach dem Füllen der Flüssigkeitspackung diese durch Verschweißen geschlossen wird. Dieses Schweißen kann man durch Siegelbacken, auch durch Impulsschweißen oder Ultraschallschweißen durchführen.

Bekannt sind Ultraschallschweißvorrichtungen mit entsprechend aufgebauten Sonotroden. Eine bekannte, aus Titan gebildete Sonotrode weist eine vorderseitige Stirnfläche in Form einer leistenförmigen Ebene auf, nämlich an der Spitze der Sonotrode, und der flüssigkeitsdicht zu verschließende doppelte Kartonstreifen muß zwischen dieser vorderseitigen Stirnfläche und einem Gegenbacken mit entsprechend streifenförmiger Ebene eingeklemmt und an einer exakt bemessenen Linie mit der Ultraschallschweißenergie belegt werden. Dabei kommt es auf eine recht präzise Parallelität zwischen der vorderseitigen Stirnfläche der Sonotrode einerseits und dem Gegenbacken bzw. Amboß andererseits an. Zur Erreichung guter Schweißlinien am doppelten Kartonstreifen beträgt die Toleranz dieser Parallelität nur wenige Hundertstel Millimeter.

Um einen Amboß und eine Sonotrode in derart präziser Weise parallel zueinander zu halten, muß man die die Werkzeuge stützenden Maschinenteile mit sehr geringen Toleranzen aufbauen. Dies ist nicht nur sehr teuer infolge hoher Fertigungskosten, sondern es zeigt sich mit Nachteil eine geringe Lebensdauer, weil durch die von der Sonotrode erzeugten Schwingungen die Lager verhältnismäßig schnell ausgeschlagen werden, so daß mindestens die geforderten engen Toleranzen bald nicht mehr haltbar sind. Wenn nun bei den bekannten Systemen die Stützlager, vorzugsweise Wälzlager, Getriebe und dergleichen durch die Schwingungen stark beansprucht und nach verhältnismäßig kurzer Lebensdauer beschädigt werden, leidet darunter die Qualität der zu erstellenden Siegelnaht und mithin die Dichtigkeit einer Flüssigkeitspackung.

Für dieses Anwendungsgebiet, aber auch bei anderen Anwendungen, wo flache Materialien durch eine gute Siegelnaht miteinander verbunden werden sollen, bestehen die beschriebenen Nachteile, wenn man sonst das mit vielen Vorteilen verbundene System des Ultraschallschweißens anwendet.

Unabhängig von dem technischen Gebiet der Packungsherstellung, aber speziell auch für dieses, besteht daher erfindungsgemäß die Aufgabe, die Vorrichtung der eingangs genannten Art auf möglichst preiswerte Weise für ein gutes Ultraschallschweißen so auszugestalten und anzuordnen, daß die Lager und Antriebseinrichtungen der Maschine, in welcher die Ultrachallschweißvorrichtung angebracht Ist, nicht durch die Schwingungen nachteilig beeinträchtigt werden, gleichzeitig insbesondere bei der Herstellung von Fließmittelpackungen gute Hygieneeigenschaffen gegeben sind, dabei allgemein trotz dieser Bedingungen die Parallelität der Schweißflächen an Sonotrode und Amboß in engen Toleranzgrenzen gehalten werden kann.

Diese Aufgabe wird erfindungsgemäß dadurch gelöst, daß der massiv ausgebildete Amboß von wenigstens einer inneren Bohrung durchzogen ist, in der zur Entkopplung der Schwingungen über elastische, flexible Ringteile unter Bildung eines Ringspaltes eine Tragwelle angeordnet ist, deren Außendurchmesser kleiner als der Innendurchmesser der inneren Bohrung ist, wobei der Außendurchmesser des elastischen Ringteiles im nicht eingebauten Zustand größer als der Innendurchmesser der inneren Bohrung ist, so daß der Amboß unter Vorspannung auf der beschriebenen Welle sitzt.

Für den Fachmann hätte es sich bei Kenntnis des Standes der Technik und Stellung der vorgenannten Aufgabe möglicherweise angebeten, die Entkopplung der Schwingungen weniger im Bereich des Ambosses, vielleicht sogar in seinem Bereich überhaupt nicht vorzunehmen sondern im gesamten Lagerbereich zwischen der Schwingungsquelle und der Maschine. Statt einer aufwendigen Entkopplung von dem durch Schwingungen angeregten und selbst schwingenden Amboß nach rückwärts zu seinen Lagern und Stützteilen und gleichzeitig auch vom Schweißwerkzeug nach rückwärts, also über einen geschlossenen Lagerkreis - wird erfindungsgemäß im Bereich des Ambosses die gewünschte Entkopplung vorgenommen. Dies gelingt in überraschender Weise dadurch, daß die den Amboß halternde Welle gegenüber dem schwingenden Amboß berührungslos gehalten wird, d.h. nicht Metall auf Metall schlägt. Zur Erfüllung der Stütztätigkeit dienen die elastischen, flexiblen Ringteile, weiche den Ringspalt zwischen der im Außendurchmesser kleineren Welle und der im Innendurchmesser größeren inneren Bohrung ausfüllen. Wenn außerdem für ausreichend große Ringteile gesorgt ist, kann die Entkopplung von den schädlichen Schwingungen innerhalb des Bereiches des Ambosses erfolgen. Das verwendete Ringteil hat vorzugsweise im radial liegenden Querschnitt Ringform und kann in axialer Richtung verschiedene Längen haben. Längere Ringteile kann man als Hülsen bezeichnen, kürzere Ringtelle mehr als Ringe. Durch das erfindungsgemäß vorgesehene Durchmesserverhältnis zwischen Bohrung und Ringteilen sitzt die Welle unter einer gewissen Vorspannung in der inneren Bohrung des Ambosses. Dadurch ergibt sich mit Vorteil eine elastische Aufhängung des Ambosses auf dieser Welle. Hierdurch gelingt sehr günstig eine radiale Entkopplung, wobei die genannten Ringteile die eigentlichen Entkopplungsglieder sind.

Es ist also nicht mehr erforderlich, im gesamten Lagerbereich vom Amboß nach rückwärts einerseits und auch vom Schweißwerkzeug nach rückwärts andererseits, also in dem geschlossenen Lagerkreis, mit hohen Fertigungskosten Lagerungen mit sehr geringen Toleranzen vorzusehen. Stattdessen übernehmen die Ringteile in der vorteilhaften Anordnung in der inneren Bohrung des Ambosses die erforderlichen Aufgaben, ohne daß die übrigen Bedingungen zur Durchführung eines exakten Ultraschallschweißens beeinträchtigt wären.

Dabei ist es besonders vorteilhaft, wenn bei weiterer Ausgestaltung der Erfindung in der Außenfläche der Welle in ihrer axialen Richtung eine Vielzahl von Nuten im Abstand voneinander angebracht ist, die wenigstens teilweise die Ringteile aufnehmen. Es ist maschinentechnisch einfach, in axialer Richtung im Abstand voneinander außen auf einer Welle Nuten vorzusehen. Diese Nuten können verschieden breit, verschieden tief und in verschiedenem Abstand voneinander angeordnet sein. Sie können teilweise mit den genannten Ringteilen besetzt und teilweise leer sein. Die oben beschriebene Entkopplung kann durch die entsprechende Vielzahl von Ringteilen und ihre geeignete Ausgestaltung einwandfrei gewährleistet sein. Besonders günstig wirkt sich diese Anordnung der Ringteile in unterschiedlicher Verteilung in Nuten in axialer Längsrichtung der Welle aus, wenn man an die Parallelität der gegeneinanderwirkenden Flächen von Sonotrode und Amboß denkt. Die oben erwähnte Parallelität ist nämlich auf einfache Weise mit Hilfe dieser Ringteile einstellbar. Durch die erfindungsgemäßen Maßnahmen werden nicht nur Kosten gespart, sondern es werden die Herstellungsbedingungen erfüllt und sogar im Falle von Flüssigkeitspackungen die Hygieneeigenschaften gewährleistet. Beim Einsatz bekannter Entkopplungseinrichtungen wurde häufig ein zwischen Schweißteilen einvulkanisiertes Gummiteil durch die Reinigung derart beeinträchtigt, daß sich Hygieneprobleme ergeben haben. Besonders kritisch war dies bei der Herstellung von Milchverpackungen, weil Milch sich in jeden Spalt und an jede rauhe Oberfläche beschädigter Teile ansetzt und dort zu ernsthaften Hygieneproblemen führen kann.

Dabei hat es sich als besonders vorteilhaft erwiesen, daß die Ringteile O-Ringe sind, die vorzugsweise unterschiedliche Steifigkeit "C" haben. Diese wird teilweise auch als Shore-Härte bezeichnet. Durch die Verwendung solcher O-Ringe ist nicht nur eine technisch sehr einfache Handhabung und Wartung des Systems gewährleistet, sondern auch die Kosten können stark gesenkt werden. O-Ringe sind bekanntlich leicht zu beschaffende und billige Ersatzteile. Dadurch ergibt sich eine einfache Ersatzteilhaftung, und gleichzeitig hat man geringe Fertigungskosten bei in weiten Grenzen veränderbarer Dämpfung und Steifigkeit des Trägersystems. Die Parallelität kann mit preiswerten Mitteln innerhalb der gewünschten Toleranzgrenzen gehalten werden, denn die O-Ringe sorgen für einen praktischen Seibstausgleich. Durch die O-Ringe als Dämpfungsglieder wird eine metallische Berührung zwischen dem Amboß und seinem Trägersystem auf einfache Weise verhindert. Die Dämpfung kann nicht nur insgesamt sondern auch über die Länge des Ambosses verändert werden. Beispielsweise kann man die Anzahl der O-Ringe oder auch ihre Shore-Härte bzw. Steifigkeit im Verlaufe der Länge der Welle verändern. Dadurch kann die Selbsteinstellbarkeit des Systems in einfachster Weise geändert werden.

Es hat sich gezeigt, daß bei einfacheren Ausführungsformen eine einzige Welle im Amboß als tragendes Element zum Auffangen aller im Betrieb auftretenden Kräfte ausreicht. In solchen Fällen genügt es also, wenn der Amboß nur von einer Bohrung durchzogen ist, in welcher eine Tragweile eingeschoben wird. Stellt man höhere Anforderungen an das Ultraschallschweißsystem, dann ist es zweckmäßig, Drehmomente, welche durch die eingeleitete Schweißkraft entstehen, d.h. durch denjenigen Druck, den die Sonotrode auf die gegenüberliegende Schweißfläche des Ambosses aufbringt, separat abgestützt werden. Zur Bildung dieser verbesserter Vorrichtung ist es zweckmäßig, wenn erfindungsgemäß der Amboß axial von drei inneren Bohrungen für die Aufnahme von zwei Stützwellen und einer an der Gesamtmaschine gelagerten Tragwelle parallel durchzogen und vorzugsweise aus nicht rostendem Stahl aufgebaut ist. Der sehr massiv ausgebildete Amboß muß erhebliche Kräfte und Schwingungen aushalten, weshalb er aus einem guten Stahl hergestellt sein sollte; für die Verwendung in hygienegefährdeten Maschinen vorzugsweise aus nichtrostendem Stahl.

Eine Ultraschallschweißvorrichtungen, bei denen die Drehmomente von nur einer einzigen, getrennt von der Tragwelle angeordneten Stützwelle aufgenommen werden, ist möglich. Es können aber Randbedingungen vorgegeben sein, welche die Lagerung außer auf einer Tragwelle und zusätzlich einer separaten Stützwelle noch von einer zweiten separaten Stützwelle zweckmäßig erscheinen lassen. Eine solche Ausführungsform wird hier als besonders vorteilhaft beschrieben, denn sie ist in vieler Hinsicht leistungsfähiger. Die durch die erwähnte Schweißkraft eingeführten Drehmomente werden ersichtlich von zwei separaten Stützwellen noch besser aufgefangen und abgestützt als von nur einer separaten Stützwelle zusätzlich zur Tragwelle. Bei sehr langen Tragwellen könnte beim Einleiten von Kräften eine Durchbiegung des Amboß-Systems auftreten, und dies wird im allgemeinen und in der Hauptsache von der Tragwelle selbst aufgenommen. Die durch die Schweißkräfte auftretenden Drehmomente hingegen werden bei der hier beschriebenen bevorzugten Ausführungsform vorzugsweise von den zwei Stützwellen aufgenommen. Man könnte sogar an den Aufbau mit einer dritten Stützwelle denken. Die Praxis hat aber gezeigt daß selbst bei besonderen Ausführungsformen mit langer Tragweile und langem Amboß (oder sogar mit mehreren hintereinanderangeordneten Ambossen) die Durchbiegung von der Tragwelle und die Drehmomente von zwei Stützwellen aufgefangen werden. Dem steht nicht die Überlegung entgegen, daß auch die Stützwellen eine gewisse Tragefunktion haben.

Je größer der Abstand der Stützwellen von der Tragewelle sind, umso geringer kann der Durchmesser der Stützwellen und auch der Tragwelle werden, da sich durch den größer werdenden Abstand die Flächenmomente und die Widerstandsmomente vergrößern. Hier handelt es sich aber um spezielle Platzfragen, wobei zu bemerken ist, daß im allgemeinen die Maschinen möglichst klein ausgestaltet werden sollen und daher wenig Platz vorhanden ist. Weiterhin ist es bei vorteilhafter Ausgestaltung der Erfindung zweckmäßig, wenn die Tragwelle an ihren Enden, in die Enden umgreifenden Passungen gehaltert, von maschinenfesten Supporten gelagert ist. Die auftretenden Kräfte hängen im Sinne der vorstehenden Ausführungen von dem Abstand der Supporte ab, von denen die Tragwelle gehaltert wird. Die Halterung selbst erfolgt über Passungen, in welche die Enden der Tragwelle eingesteckt und dort befestigt sind. Mit Hilfe der maschinenfesten Supporte wird das Konzept der Erfindung deutlich, daß nämlich die Tragwelle als maschinenfeste Lagerung und der berührungslos getrennt davon angeordnete, schwingende Amboß vorgesehen sind. Innerhalb des Bereiches des Ambosses erfolgt also die Schwingungsentkopplung, weil die maschinenfeste Tragwelle über die erfindungsgemäß vorgesehenen Ringteile den schwingenden Amboß abstützt.

Vorteilhaft ist es erfindungsgemäß weiterhin, wenn zwischen der Schulter der Passung und der Stirnseite des Ambosses ein O-Ring aus elastischem flexiblem Material angeordnet und durch wenigstens eine Schraube einklemmbar ist, die axial in das Ende der Tragwelle und durch das Passungsstück ragt. Der beschriebene O-Ring aus Kunststoff, Gummi oder einem Elastomeren wird erfindungsgemäß zwischen das Passungsstück (über seine Schulter) und den Amboß (seine stirnseitige ebene Fläche) angeordnet und erlaubt durch das Einklemmen mittels Anziehen der Schraube eine Dämpfung und damit auch Schwingungsentkopplung in axialer Richtung. Während die Schwingungsentkopplung in radialer Richtung durch die erwähnten Ringteile, bei einer bevorzugten Ausführungsform die O-Ringe erfolgt, ist auch für eine axiale Entkopplung gesorgt, nämlich den zuletzt beschriebenen O-Ring zwischen Passung und Amboß.

Im Falle der radialen Entkopplung ist durch die Bemessung der Ringteile dafür gesorgt, daß die Welle, vorzugsweise die Tragwelle, unter einer Vorspannung in der inneren Bohrung des Ambosses sitzt mit der Folge einer elastischen Aufhängung und damit der radialen Entkopplung. Zwischen Tragwelle und Amboß ist also jegliche metallische Berührung ausgeschaltet, insbesondere auch unter Last. Mit anderen Worten ist dafür gesorgt, daß der Ringspalt größer ist als die unter Last auftretende Verformung des Ambosses gegenüber der Tragwelle. Die gleichen Verhältnisse gelten auch gegenüber den Stützwellen.

In radialer und auch in axialer Weise ist also erfindungsgemäß mit einfachen Mitteln eine Entkopplung der für die Lager und Getriebe schädlichen Schwingungen erreicht.

Es ist erfindungsgemäß weiterhin vorteilhaft, wenn auf der Tragwelle und der wenigstens einen parallel dazu verlaufenden Stützwelle zwei Ambosse axial hintereinander angeordnet und durch auf den Wellen gebildete Absätze im Abstand gehalten sind und O-Ringe zwischen Absatz und Amboß vorgesehen sind. Die Erfahrung der Konstrukteure hat ergeben, daß das erfindungsgemäße Konzept auch bei sehr leistungsstarken Maschinen verwendet werden kann, bei denen die Anzahl Schweißungen pro Zelteinheit sogar dadurch verdoppelt werden kann, daß zwei Ultraschallschweißstationen nebeneinander angeordnet werden derart, daß auf der Tragwelle axial hintereinander im Abstand zwei Ambosse vorgesehen werden. Anstelle der stirnseitigen Flächen der Passung kann im Bereich zwischen den zwei Ambossen die stirnseitige Fläche der Absätze verwendet werden, so daß im übrigen die Maßnahmen gemäß der Erfindung in gleicher Weise verwendbar sind. Bei einer von der Tragwelle separat und parallel angeordneten Stützwelle kann man zwei Ambosse anordnen. Sind besondere Kräfte und Drehmomente erforderlich, dann kann man zu der einen Tragwelle zwei Stützwellen zusätzlich einsetzen. Trotz der erheblichen Gewichte zweier Ambosse auf einer einzigen Tragwelle können die Verformungen der zwei Ambosse von der einen Tragwelle übernommen werden, und die Drehmomente durch die Schweißkräfte von den Stützwellen aufgenommen werden. Durch die Anordnung der Ringteile und ihre Bemessung werden die Lager und Antriebseinrichtungen der Maschine nicht mehr durch die unvermeidlichen Schwingungen beeinträchtigt, und durch die Anordnung der O-Ringe zwischen Amboß und Absatz oder zwischen Amboß und Stirnseite der Passung sind axiale Kapselungen vorgesehen, so daß selbst bei Verwendung von Konservierungsmitteln im Ringraum zwischen Tragwelle und Amboß oder zwischen Stützwelle und Amboß ein Austreten dieser Konservierungsmittel nach außerhalb des Ringraumes ausgeschaltet ist und die Gesamtmaschine gute Hygieneeigenschaften hat.

Weitere Vorteile, Vorteilhafte Merkmale und Anwendungsmöglichkeiten der vorliegenden Erfindung ergeben sich aus der folgenden Beschreibung in Verbindung mit den Zeichnungen. Es zeigen:
- Figur 1: perspektivisch zwei im Abstand axial hintereinander auf einer Tragwelle und zwei Stützwellen angeordnete Ambosse,
- Figur 2: eine Querschnittsansicht durch den Amboß senkrecht durch die Wellen,
- Figur 3: eine Schnittansicht durch Figur 2 entlang der Linie III-III der Figur 2,
- Figur 3a: vergrößert und abgebrochen einen Teil der Oberfläche der Tragwelle ohne Ringteile,
- Figur 4: abgebrochen einen Teil der Maschine mit der Ultraschallschweißvorrichtung mit der Sonotrode in Funktionseingriff mit dem Amboß über den doppelten Kartonstreifen einer Packung,
- Figur 5: schematisch den Aufbau einer Tragwelle mit O-Ringen innerhalb der inneren Bohrung eines Ambosses und abgebrochen, verkippt darunter angebrachter Sonotrode vor Funktionseingriff und
- Figur 6: den Funktionseingriff der verkippten, abgebrochen dargestellten Spitze der Sonotrode gegen den Amboß mit der daraus folgenden Verkippung desselben gegenüber der Tragwelle.

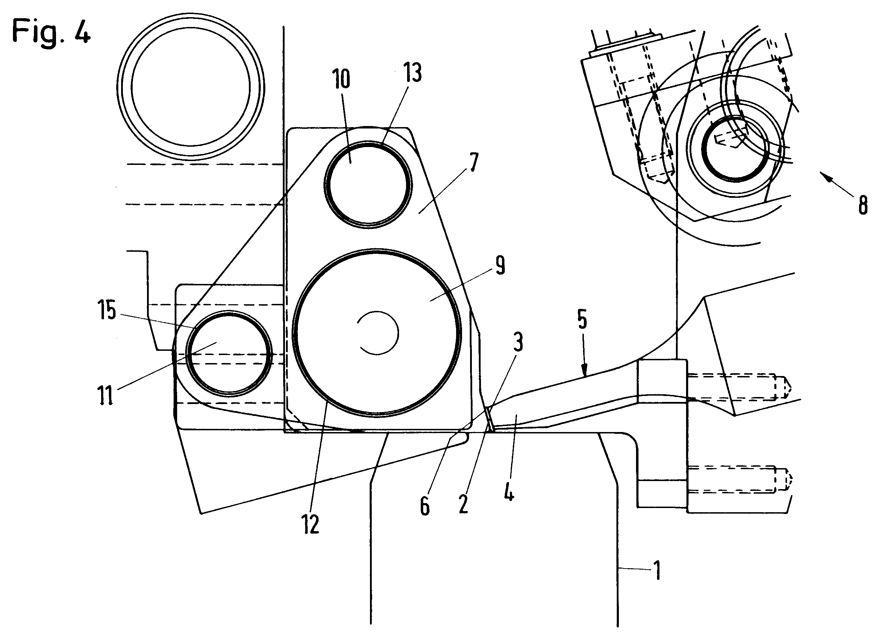

Die in Figur 4 dargestellte Fließmittelpackung 1 weist an ihrem oberen Ende einen durch nicht dargestellte Faltlinien gebildeten doppelten Kartonstreifen 2 auf, welcher gerade zwischen der vorderseitigen Stirnfläche 3 der Spitze 4 einer Sonotrode 5 und der gegenüberliegenden Schweißfläche 6 eines Ambosses 7 eingeklemmt wird. Die Klemmung erfolgt durch die Bewegung der Sonotrode 5 über ihren Antrieb 8 gegenüber dem Amboß 7, der ebenfalls auf einer nicht gezeigten, vorgegebenen Bahn bewegbar ist. Zwischen den nicht dargestellten zwei Lagen des doppelten Kartonstreifens liegt eine Siegelnaht, welche durch Ultraschallschweißen hergestellt werden soll und nicht besonders dargestellt ist, weil sie jedem Fachmann bekannt ist.

Obgleich die Vorrichtung zum Ultraschallschweißen hier in Verbindung mit Flüssigkeitspackungen mit doppeltem Kartonstreifen und dort vorgesehener Siegelnaht beschrieben wird, ist die Anwendung des erfindungsgemäßen Konzeptes auf diese konkrete Technik selbstverständlich nicht beschränkt.

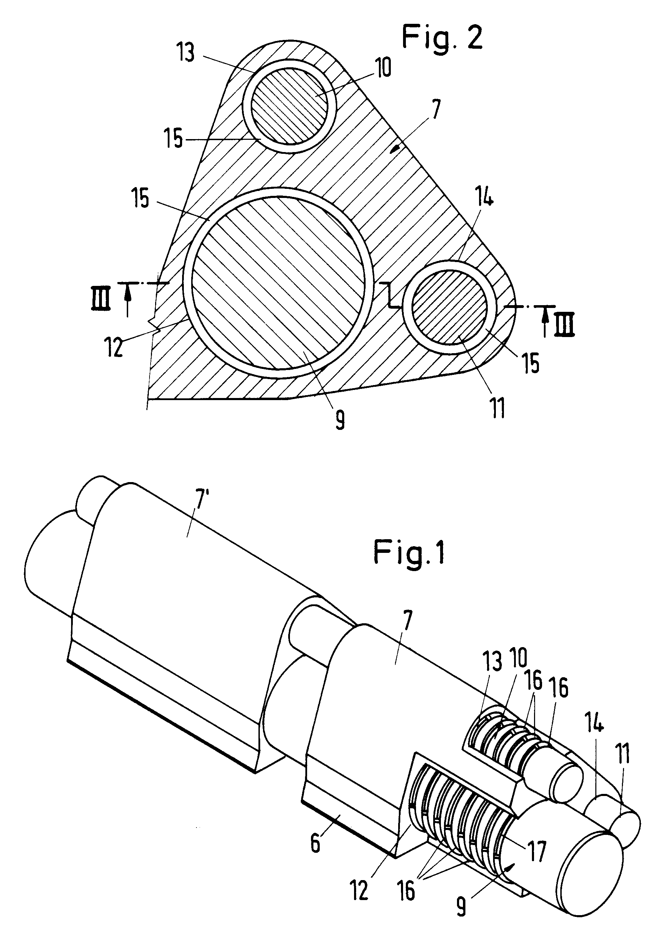

In Figur 1 sind auf einer Tragwelle 9 und zusätzlich zwei separat davon und parallel zu dieser verlaufenden Stützwellen 10 und 11 zwei im Abstand d voneinander gelagerte Ambosse 7 und 7' dargestellt. Im folgenden genügt die Beschreibung eines Ambosses 7, weil auch der andere Amboß 7' gleich wie der erstgenannte Amboß 7 ausgestaltet ist.

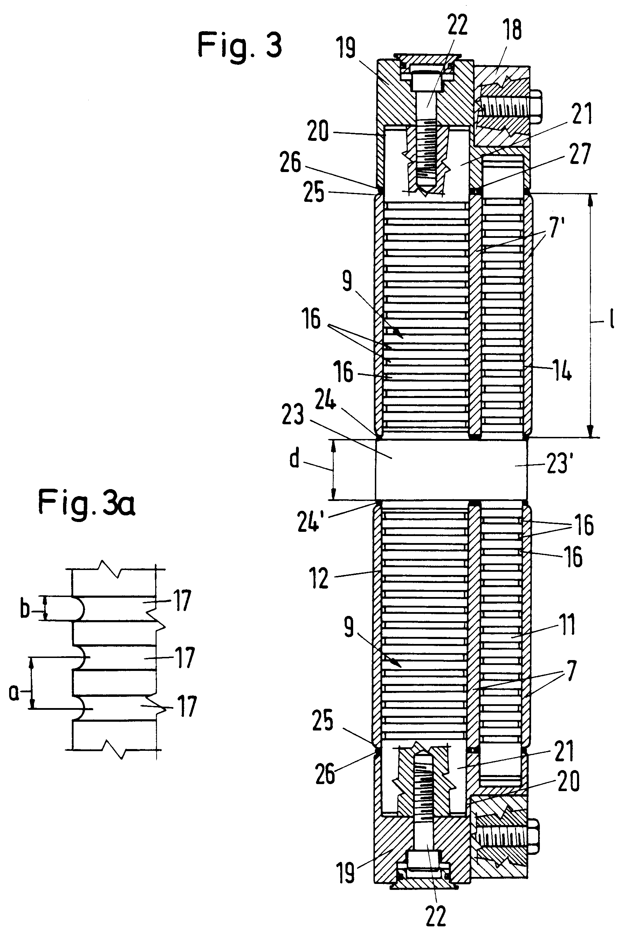

Der Amboß 7 ist von drei inneren Bohrungen 12 (für die Tragwelle 9), 13 (für die erste Stützwelle 10) und 14 (für die zweite Stützwelle 11) durchzogen. Diese drei inneren Bohrungen 12, 13, 14 haben unterschiedlichen Durchmesser und liegen im Abstand derart zueinander, daß ihre Achsen im Querschnitt gemäß der Darstellung der Figur 2 ein Dreieck aufspannen. Der Durchmesser der ersten inneren Bohrung 12 für die Tragwelle 9 ist der größte, während die Durchmesser der Bohrungen 13 und 14 für die beiden Stützwellen 10 und 11 gleich und kleiner als die der Bohrung 12 sind.

Berührungslos, d.h. ohne metallische Berührung sind innerhalb dieser Bohrungen 12, 13 und 14 die Wellen 9 (Tragwelle), 10 (erste Stützwelle) und 11 (zweite Stützwelle) gelagert. Jede Welle ist von einem Ringspalt 15 umgeben, den man jeweils in Figur 2 besonders gut sieht. Aber auch in den Figuren 4 bis 6 sind die Ringspalte 15 erkennbar. Der Ringspalt 15 wird deshalb gebildet, weil der Außendurchmesser der jeweiligen Welle 9 bzw. 10 bzw. 11 kleiner ist als der Innendurchmesser der jeweiligen inneren Bohrung 12 bzw. 13 bzw. 14.

Damit der Amboß 7 auf den Wellen 9-11 aufgelegt werden kann, befinden sich Ringtelle 16 in Form von O-Ringen im Abstand a voneinander in Nuten 17, deren Breite in Figur 3a mit b angegeben ist. In dem hier dargestellten Beispiel ist der Abstand a der Nuten 17 voneinander in axialer Richtung der Wellen 9-11 gleichbleibend, und auch die Breite b der Nuten 17 ist für alle Wellen 9-11 und Nuten 17 gleich. Dies gilt aber nur für die hier gezeigte bevorzugte Ausführungsform. Damit ist die Lagerung des Ambosses 7 bezüglich der Wellen 9-11 beschrieben. Als repräsentative maschinenfeste Welle wird die Tragwelle 9 und ihre Abstützung beschrieben. An den in Figur 3 nur teilweise gezeigten Supporten 18 sind Paßstücke 19 mit Passungen 20 angebracht, welche die Enden 21 der Tragwelle 9 umfassen und aufnehmen. Axial von außen ragt in eine Gewindebohrung im Ende 21 der Tragwelle 9 eine Schraube 22, welche durch das Passungsstück 19 axial von außen derart hindurchgeht, daß durch das Festziehen der Schraube 22 ein Verklemmen des Ambosses 7 bzw. 7' gegenüber dem Passungsstück 19 ermöglicht wird.

Genauer wird dies anhand der Figur 3 beschrieben. Dort ist die Tragwelle 9 länglich ausgebildet mit in der Mitte zwischengeschaltetem Absatz 23 (die Verhältnisse sind ähnlich bei der Stützwelle 11, wo der Absatz mit 23' bezeichnet wird.) Der Absatz 23 hat in axialer Richtung zu beiden Seiten hin eine Ringschulter, auf der ein mittlerer O-Ring 24 bzw. 24' anliegt, dessen gegenüberliegende Anlagefläche die ebene Ringfläche des Ambosses ist. Auf den Außenseiten hat der Amboß 7 bzw. 7' wiederum ebene, ringförmige Stirnseiten 25, so daß dort ebenfalls ein äußerer O-Ring 26 angeordnet werden kann, der wiederum axial nach außen gegen die ringförmige Schulter 27 der Passung 20 anliegt.

Bezeichnet man die Länge des Ambosses 7' oder auch die des Ambosses 7 mit l, dann ist bei dem Aufbau der in den Figuren dargestellten Ausführungsform die Länge l z.B. des Ambosses 7' kürzer als der Abstand zwischen der ebenen, ringförmigen Schulterfläche 26 der Passung 20 und der ringförmigen, ebenen Fläche des Absatzes 23. Der sich dadurch an den beiden Enden des Ambosses ergebende Spalt von z.B. 1,5 mm Breite wird durch die beschriebenen O-Ringe 24 und 26 ausgefüllt. Diese O-Ringe sind reinigungsmittelbeständig und sorgen für eine Kapselung und gleichzeitig axiale Entkopplung für die Schwingungen. Das Zusammenpressen der O-Ringe erfolgt durch die beschriebene Schraube 22.

Der Abstand d der zwei Ambosse 7, 7' gemäß Figur 3 wird also durch die Absätze 23 bzw. 23' gebildet. Der Durchmesser dieser Absätze, z.B. des Absatzes 23, ist etwas größer als der Außendurchmesser der betreffenden Welle, z.B. der Tragwelle 9 (oder im Falle des Absatzes 23' der Stützweile 11). Im Passungsstück 19 ist oben und unten die Passung 20 vorgesehen, in welche das Ende 21 der Tragwelle 9 eingeschoben wird. Die Stirnflächen der Tragwelle 9 liegen also jetzt gegen den Bohrungsgrund der Passung 20 im Passungsstück 19. Durch Festziehen der erwähnten Schrauben 22 werden die beiden Ambosse 7, 7' gegen den mittleren Absatz 23 festgezogen bzw. verspannt.

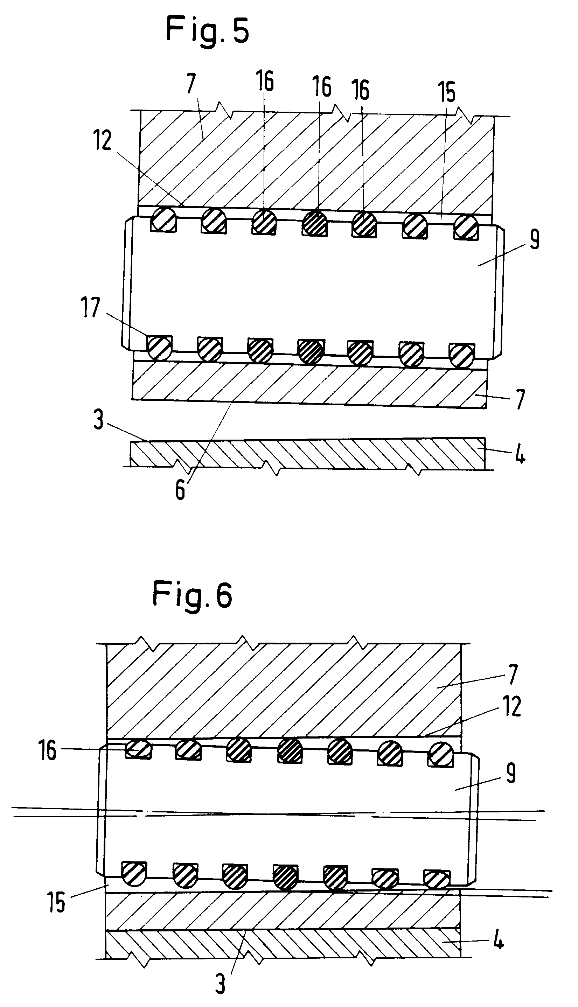

Die Funktion kann im Prinzip anhand der Figuren 5 und 6 erläutert werden. Man erkennt dort wieder schematisch die kurz dargestellte Tragwelle 9, in deren Nuten 17 O-Ringe verschiedener Schraffur eingelegt sind. Eine grobe Schraffur bedeutet geringe Steifigkeit, eine feine Schraffur bedeutet hohe Steifigkeit. Man erkennt, daß in Figur 5 der O-Ring 16 mit der längsten Bezugslinie die feinste Schraffur und damit größte Steifigkeit hat, welche nach außen hin symmetrisch in axialer Richtung abnimmt. So hat beispielsweise der äußerste O-Ring in Figur 6, dessen Bezugslinie horizontal verläuft, die geringste Steifigkeit. Man erkennt hier auch, daß der Durchmesser der Tragwelle 9 kleiner ist als der der inneren Bohrung 12. Der Ringspalt 15 zwischen diesen beiden Oberflächen zwischen Tragwelle 9 und inneren Bohrung 12 des Ambosses 7 ist auch bei Last ungleich Null. Das heißt, auch bei Belastung tritt keinerlei metallische Berührung zwischen Tragwelle 9 und Amboß 7 auf. Der Spalt 15 ist also größer als die unter Last auftretende Verformung des Ambosses 7 gegenüber der Tragwelle 9. Die gleichen Verhältnisse gelten im übrigen auch im Hinblick auf die Stützwellen 10 und 11.

Jeder in der Nut 17 sitzende O-Ring 16 ist vom benachbarten vollkommen getrennt. Man erkennt, daß der jeweilige Außendurchmesser des O-Ringes 16 größer ist als der Innendurchmesser der Bohrung 12 des Ambosses 7. Dadurch sitzt die Tragwelle 9 unter Vorspannung in der Bohrung 12 des Ambosses 7. Es ergibt sich hierdurch die oben beschriebene elastische Aufhängung und damit die radiale Entkopplung. Durch die anhand Figur 3 beschriebenen O-Ringe 25 im Bereich der Enden 21 der Tragwelle 9 ergibt sich auch die Kapselung des Ringraumes 15 nach außen hin mit der Folge der guten Hygiene.

Der Parallelitätsausgleich ist durch die flexible Anordnung der O-Ringe mit unterschiedlicher Steifigkeit bzw. Shore-Härte gegeben und läßt sich anhand der Figuren 5 und 6 gut beschreiben.

In Figur 5 sieht man die Tragwelle 9 mit dem oben abgebrochen gezeigten Amboß 7. Im Abstand von dessen unterer Kante, d.h. der Siegelfläche 6, ist bewußt übertrieben dargestellt unter einem Winkel die nach unten abgebrochen gezeigte Spitze 4 der Sonotrode angeordnet.

Bewegt sich nun diese in ihre Betriebsfunktion derart, daß ihre vorderseitige Stirnfläche 3 mit der Siegelfläche 6 des Ambosses 7 in Druckeingriff gelangt (wobei in Figur 6 kein doppelter Kartonstreifen dazwischen angeordnet gezeichnet ist), dann verkippt sich auch der Amboß 7 gegenüber der maschinenfesten Tragwelle 9. In Figur 6 ist die Stellung unter Last wiedergegeben, und man erkennt, daß der Ringspalt 15 größer ist als die Verformung des Ambosses 7 gegenüber der Tragwelle 9 bzw. durch diese. Hier geschieht der Parallelitätsausgleich durch die flexible Anordnung der in den Nuten 17 sitzenden Ringteile 16, hier der O-Ringe mit den unterschiedlichen Shore-Härten bzw. Steifigkeit. Durch die Anordnung, Ausgestaltung und Wirkung der Ringteile 16 wird eine gleichmäßige Schweißkraft erreicht, die im Rahmen enger Toleranzen über die gesamte Schweißfläche 6 des Ambosses konstant ist. Die Kräfte, welche durch die Verformung der O-Ringe 16 entstehen, bzw. die jeweils entsprechende Reaktionskraft, ist mit Vorteil kleiner als die zulässige Abweichung. Trotz der Verkippung der Bohrung 12 im Amboß 7 gegenüber der Tragwelle 9 ergibt sich dergewünschte Parallelitätsausgleich. Die Summe der Reaktionskräfte aus den verformten O-Ringen 16 liegt innerhalb des zulässigen Toleranzfeldes der Schweißkraft.

Gleiche Verhältnisse gelten selbstverständlich auch für die Stützwellen 10 und 11.

Durch die Anordnung der O-Ringe 16, welche außerdem hygienisch eingekapselt sind, ergibt sich auch bei einer langen Tragwelle 9 ein ausreichendes Biegewiderstandsmoment. Dadurch erfolgt die Entkopplung zu den Schwingungen hin innerhalb der Bohrung des Ambosses.

Das Gewicht des Gesamtamboßsystems kann man in vorteilhafter Weise auch dadurch reduzieren, daß relativ dünne Trag- und Stützwellen in relativ großem radialem Abstand zueinander angeordnet werden. Dadurch werden große Flächenmomente und Widerstandsmomente erzielt.

Dies gilt insbesondere bei mehreren hintereinander angeordneten Ambossen und einer daraus resultierenden großen Spannweite zwischen den Supporten (Paßstücken).

## Patentansprüche

1. Vorrichtung zum Ultraschallschweißen von Siegelnähten, insbesondere am doppelten Kartonstreifen (2) einer Fließmittelpackung (1), mit einer Sonotrode (5) und einem deren vorderseitigen Stirnfläche (3) gegenüberliegenden Amboß (7), die beide aufvorgegebenen Bahnen bewegbar sind, dadurch gekennzeichnet, daß der massiv ausgebildete Amboß (7, 7') von wenigstens einer inneren Bohrung (12, 13, 14) durchzogen ist, in der zur Entkopplung der Schwingungen über elastische, flexible Ringteile (16) unter Bildung eines Ringspaltes (15) eine Tragwelle (9; 10, 11) gelagert ist, deren Außendurchmesser kleiner als der Innendurchmesser der inneren Bohrung (12, 13, 14) ist, wobei der Außendurchmesser des elastischen Ringteiles (16) im nicht eingebauten Zustand größer als der Innendurchmesser der inneren Bohrung (12-14) ist.

2. Vorrichtung nach Anspruch 1, dadurch gekennzeichnet, daß in der Außenfläche der Tragwelle (9; 10, 11) in ihrer axialen Richtung eine Vielzahl von Nuten (17) im Abstand (a) voneinander angebracht ist, die wenigstens teilweise die Ringteile (16) aufnehmen.

3. Vorrichtung nach Anspruch 1 oder 2, dadurch gekennzeichnet, daß die Ringteile (16) O-Ringe sind, die vorzugsweise unterschiedliche Materialsteifigkeit "C" haben.

4. Vorrichtung nach einem der Ansprüche 1 bis 3, dadurch gekennzeichnet, daß der Amboß (7, 7') axial von drei inneren Bohrungen (12, 13, 14) für die Aufnahme von zwei Stützwellen (10, 11) und der an der Gesamtmaschine gelagerten Tragwelle (9) parallel durchzogen und vorzugsweise aus nichtrostendem Stahl aufgebaut ist.

5. Vorrichtung nach einem der Ansprüche 1 bis 4, dadurch gekennzeichnet, daß die Tragwelle (9) an ihren Enden (21), in die Enden (21) umgreifenden Passungen (20) gehaltert, von maschinenfesten Supporten (18) gelagert ist.

6. Vorrichtung nach Anspruch 5, dadurch gekennzeichnet, daß zwischen der Schulter (27) der Passung (20) und der Stirnseite (25) des Ambosses (7) ein O-Ring aus elastischem flexiblem Material angeordnet und durch wenigstens eine Schraube (22) einklemmbar ist, die axial in das Ende (21) der Tragwelle (9) und durch das Passungsstück (19) ragt.

7. Vorrichtung nach einem der Ansprüche 1 bis 6, dadurch gekennzeichnet, daß auf der Tragwelle (9) und der wenigstens einen parallel dazu verlaufenden Stützweile (10, 11) zwei oder mehrere Ambosse (7, 7') axial hintereinander angeordnet und durch auf den Wellen (9; 10, 11) gebildete Absätze (23, 23') im Abstand (d) gehalten sind und daß O-Ringe (16) zwischen Absatz (23, 23') und Amboß (7, 7') vorgesehen sind.

## Claims

1. Apparatus for the ultrasonic welding of sealing seams, in particular on the doubled cardboard strip (2) of a fluid pack (1), comprising a sonotrode (5) and an anvil (7) disposed opposite the front end face (3) thereof, the sonotrode and the anvil both being movable on predetermined paths, characterised in that the anvil (7, 7') which is of a solid nature has at least one internal bore (12, 13, 14) passing therethrough, in which bore a carrier shaft (9; 10, 11) is mounted by way of elastic flexible ring portions (16), forming an annular gap (15), for decoupling the oscillations, the outside diameter of the carrier shaft being smaller than the inside diameter of the internal bore (12, 13, 14), wherein the outside diameter of the elastic ring portion (16) in the non-installed condition is larger than the inside diameter of the internal bore (12-14).

2. Apparatus according to claim 1 characterised in that a plurality of grooves (17) are disposed at a spacing (a) from each other in the outside surface of the carrier shaft (9; 10, 11) in the axial direction thereof, the grooves at least partially accommodating the ring portions (16).

3. Apparatus according to claim 1 or claim 2 characterised in that the ring portions (16) are O-rings which are preferably of different material stiffness 'C'.

4. Apparatus according to one of claims 1 to 3 characterised in that the anvil (7, 7') is axially penetrated in parallel relationship by three internal bores (12, 13, 14) for accommodating two support shafts (10, 11) and the carrier shaft (9) which is mounted on the overall machine, and the anvil is preferably made from stainless steel.

5. Apparatus according to one of claims 1 to 4 characterised in that at its ends (21), held in fittings (20) which embrace the ends (21), the carrier shaft (9) is mounted by supports (18) which are fixed with respect to the machine.

6. Apparatus according to claim 5 characterised in that an O-ring of elastic flexible material is arranged between the shoulder (27) of the fitting (20) and the end (25) of the anvil (7) and can he clamped by at least one screw (22) which projects axially into the end (21) of the carrier shaft (9) and through the fitting portion (19).

7. Apparatus according to one of claims 1 to 6 characterised in that two or more anvils (7, 7') are arranged in axial succession on the carrier shaft (9) and the at least one support shaft (10, 11) extending parallel thereto and are held at a spacing (d) by steps (23, 23') formed on the shafts (9; 10, 11) and that O-rings (16) are provided between a step (23, 23') and an anvil (7, 7').

## Revendications

1. Dispositif pour le soudage aux ultrasons de joints thermoscellables, notamment sur des bandes de carton doubles (2) d'un emballage (1) pour liquides, comportant une sonotrode (5) et une enclume (7), opposée à sa face frontale avant (3), qui toutes les deux sont mobiles sur des voies prédéfinies, caractérisé en ce que l'enclume (7, 7'), de constitution massive, est traversée par au moins un trou intérieur (12, 13, 14), dans lequel, pour assurer un découplage des vibrations, un arbre porteur (9 ; 10, 11), dont le diamètre extérieur est inférieur au diamètre intérieur du trou intérieur (12, 13, 14), est logé par l'intermédiaire de pièces annulaires souples et élastiques (16) en formant une fente annulaire (15), le diamètre extérieur de la pièce annulaire élastique (16), à l'état non monté, étant supérieur au diamètre intérieure du trou intérieur (12-14).

2. Dispositif selon la revendication 1, caractérisé en ce que, dans la surface extérieure de l'arbre porteur (9 ; 10, 11), sont rapportées à une distance réciproque (a), dans sa direction axiale, un grand nombre de rainures (17) qui au moins partiellement logent les pièces annulaires (16).

3. Dispositif selon la revendication 1 ou 2, caractérisé en ce que les pièces annulaires (16) sont des joints toriques, qui de préférence ont des rigidités (C) différentes.

4. Dispositif selon l'une des revendications 1 à 3, caractérisé en ce que l'enclume (7, 7') est traversée d'une manière parallèle et axiale par trois trous intérieurs (12, 13, 14) destinés à recevoir deux arbres de soutènement (10, 11) et l'arbre porteur (9) logé sur la machine dans son ensemble, et de préférence est réalisée en acier inoxydable.

5. Dispositif selon l'une des revendications 1 à 4, caractérisé en ce que l'arbre porteur (9) est, en ses extrémités (21), logé sur des supports (18), solidaires de la machine, en étant soutenu par des ajustements (20) enveloppant les extrémités.

6. Dispositif selon la revendication 5, caractérisé en ce qu'entre l'épaulement (27) de l'ajustement (20) et le côté frontal (25) de l'enclume (7) est disposé un joint torique en un matériau souple et élastique, le joint torique pouvant être serré par au moins une vis (22), qui axialement dépasse dans l'extrémité (21) de l'arbre porteur (9) et traverse la pièce d'ajustement (19).

7. Dispositif selon l'une des revendications 1 à 6, caractérisé en ce que sur l'arbre porteur (9) et sur au moins un arbre de soutènement (10, 11), parallèle à ce dernier, sont disposées deux enclumes ou plus (7, 7'), axialement les unes derrière les autres, ces enclumes étant maintenues à une distance (d) grâce à des décrochements (23, 23'), formés sur les arbres (9 ; 10, 11), des joints toriques (16) étant prévus entre le décrochement (23, 23') et l'enclume (7, 7').
